# EUROPEAN PATENT APPLICATION

(11) **EP 3 620 883 A1**
(43) Date of publication of application: **11.03.2020**
(21) Application number: 19194280.4
(22) Date of filing: 29.08.2019
(51) Int. Cl.: G05D 1/02

(54) **AUTONOMOUS TRAVEL CART AND METHOD OF CONTROLLING TRAVEL THEREOF**

(30) Priority: 06.09.2018 JP 2018167057
(71) Applicant: Kabushiki Kaisha Toyota Jidoshokki, Kariya-shi, Aichi 448-8671 (JP)
(72) Inventor: SUZUKI, Katsuhiko, Kariya-shi, Aichi 448-8671 (JP); KASSAI, Taro, Kariya-shi, Aichi 448-8671 (JP)
(74) Representative: TBK

(57) **Abstract**

An autonomous travel cart (1) includes a control device that determines whether or not an obstacle detected by an ultrasonic obstacle detection device (12) is detected by a laser obstacle detection device (11) based on a detection information from the laser obstacle detection device (11) and a distance information from the ultrasonic obstacle detection device (12). The control device executes a travel control based on the detection information when it is determined the obstacle detected by the ultrasonic obstacle detection device (12) is detected by the laser obstacle detection device (11), and executes the travel control based on the distance information when it is determined that the obstacle detected by the ultrasonic obstacle detection device (12) is not detected by the laser obstacle detection device (11).

## Description

### BACKGROUND ART

The present disclosure relates to an autonomous travel cart and a method of controlling a travel thereof.

In recent years, there have been proposed various techniques for utilizing an unattended autonomous travel cart when a cargo is loaded or unloaded in a manufacturing plant, a item delivery center, a parts center, or the like having a plurality of shelves and the like for storing various items (including parts). For example, in an autonomous travel cart described in Japanese Patent Application Publication No. 2012-22467, a laser range finder is mounted on a front surface of a main body, and a plurality of ultrasonic sensors are mounted on the main body at even intervals along a circumferential direction of the main body.

The laser range finder scans a laser beam in a fan-shaped fashion with a central angle of roughly 240° in a horizontal direction around the autonomous travel cart, measures the detection angle of the laser beam that returned after reflecting off an obstacle, and the propagation time of the laser beam, and detects the distance and angle from the autonomous travel cart to the obstacle. The ultrasonic sensor, after emitting ultrasonic waves, detects the ultrasonic waves that returned upon reflecting off the obstacle around the autonomous travel cart, then measures the propagation time of the ultrasonic waves, and detects the distance between the autonomous travel cart and the obstacle. In the autonomous travel cart, the obstacle is detected based on detection results of the laser range finder, the ultrasonic sensor, and the like, and the autonomous travel cart travels autonomously.

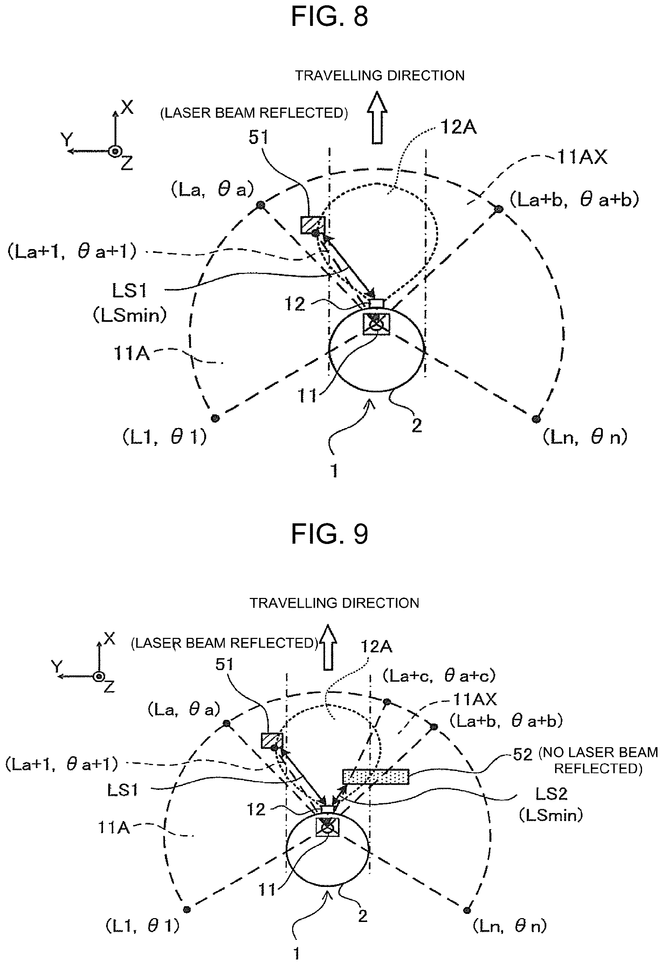

In the autonomous travel cart described in Japanese Patent Application Publication No. 2012-22467, since the laser range finder scans the laser beam in a fan-shaped fashion with a central angle of about 240 degrees in the horizontal direction around the autonomous travel cart, when an obstacle that transmits the laser beam, such as glass or a transparent resin plate, is on the traveling path, the obstacle cannot be detected as an obstacle. Thus, it is conceivable that the ultrasonic sensor detects an obstacle and a stop operation or an avoidance operation is performed. However, since the ultrasonic sensor has a wide detection range (see FIG. 8), the ultrasonic sensor erroneously judges that an obstacle is on the traveling path of the autonomous travel cart even though the obstacle is outside the traveling path of the autonomous travel cart, and the stop operation or the avoidance operation is performed.

The present disclosure has been made in view of such a situation, and its object is to provide an autonomous travel cart, which can enhance detection accuracy of an obstacle present ahead in a traveling direction and can perform more accurate traveling stop operation and avoidance operation.

### SUMMARY

In accordance with an aspect of the present disclosure, there is provided an autonomous travel cart autonomously moving in accordance with a moving route, the autonomous travel cart including a laser obstacle detection device obtaining a detection information including an obstacle position by emitting a laser beam, and outputting the detection information, an ultrasonic obstacle detection device obtaining a distance information from the autonomous travel cart to an obstacle around the autonomous travel cart and outputting the distance information and a control device controlling the autonomous travel cart to travel autonomously based on the detection information from the laser obstacle detection device and the distance information from the ultrasonic obstacle detection device. The control device includes, a detection determiner that determines whether or not the obstacle detected by the ultrasonic obstacle detection device is detected by the laser obstacle detection device based on the detection information from the laser obstacle detection device and the distance information from the ultrasonic obstacle detection device, and a travel controller executing a travel control based on the detection information from the laser obstacle detection device when the detection determiner determines that the obstacle detected by the ultrasonic obstacle detection device is detected by the laser obstacle detection device, and executing the travel control based on the distance information from the ultrasonic obstacle detection device when the detection determiner determines that the obstacle detected by the ultrasonic obstacle detection device is not detected by the laser obstacle detection device.

In accordance with another aspect of the present disclosure, there is provided a method of controlling a travel of an autonomous travel cart travelling autonomously based on a moving route. The method includes the steps of obtaining a detection information including an obstacle position by emitting a laser beam by a laser obstacle detection device, obtaining a distance information from the autonomous travel cart to an obstacle around the autonomous travel cart by transmitting an ultrasonic wave by an ultrasonic obstacle detection device, and determining whether or not the obstacle detected by the ultrasonic obstacle detection device is detected by the laser obstacle detection device based on the detection information obtained in the step of obtaining the detection information and the distance information obtained in the step of obtaining the distance information. The method further includes the steps of executing a travel control based on the detection information obtained in the step of obtaining the detection information when it is determined that the obstacle detected by the ultrasonic obstacle detection device is detected by the laser obstacle detection device in the step of determining whether or not the obstacle detected by the ultrasonic obstacle detection device is detected by the laser obstacle detection, and executing the travel control based on the distance information obtained in the step of obtaining the distance information when it is determined that the obstacle detected by the ultrasonic obstacle detection device is not detected by the laser obstacle detection device in the step of determining whether or not the obstacle detected by the ultrasonic obstacle detection device is detected by the laser obstacle detection.

Other aspects and advantages of the present disclosure will become apparent from the following description, taken in conjunction with the accompanying drawings, illustrating by way of example the principles of the present disclosure.

### BRIEF DESCRIPTION OF THE DRAWINGS

The disclosure together with objects and advantages thereof may best be understood by reference to the following description of the presently preferred embodiments together with the accompanying drawings in which:
FIG. 1 is a perspective view showing an example of an autonomous travel cart according to the present embodiment;
FIG. 2 is a schematic view illustrating an entire configuration of the autonomous travel cart;
FIG. 3 is a plan view for explaining an example of a detection region of a laser range finder and an ultrasonic detection device;
FIG. 4 is a view for explaining an example of designated area map information and an example of using the autonomous travel cart in a designated area;
FIG. 5 is a flowchart for explaining an example of a processing procedure of an ECU of the autonomous travel cart;
FIG. 6 is a sub-flowchart showing an example of sub-processing of a first obstacle detection processing of FIG. 5;
FIG. 7 is a view for explaining an example of an acquired obstacle position in the designated area;
FIG. 8 is a view for explaining an example in which the autonomous travel cart detects an obstacle ahead in a traveling direction;
FIG. 9 is a view for explaining an example in which the autonomous travel cart detects an obstacle ahead in the traveling direction;
FIG. 10 is a sub-flowchart showing an example of sub-processing of a second obstacle detection processing according to another first embodiment; and
FIG. 11 is a view for explaining an example in which an autonomous travel cart according to another second embodiment detects an obstacle ahead in a traveling direction.

### DETAILED DESCRIPTION OF THE EMBODIMENTS

Hereinafter, an autonomous travel cart according to the present disclosure will be described with reference to drawings in detail. In the drawing in which a X-axis, a W-axis, and a Y-axis are described, the X-axis, the W-axis and the Y-axis are orthogonal to each other. The Z-axis direction indicates a vertically upward direction, the X-axis direction indicates a forward direction of the autonomous travel cart 1, and the Y-axis direction indicates a left direction of the autonomous travel cart. In the drawing in which a U-axis, a V-axis, and a W-axis are described, the U-axis, the V-axis and the W-axis are orthogonal to each other. The W-axis direction indicates a vertically upward direction, represents a depth direction from a far side toward a front side with respect to a viewer of the FIG. 13. The V-axis represents a rightward direction in a width direction of the designated area.

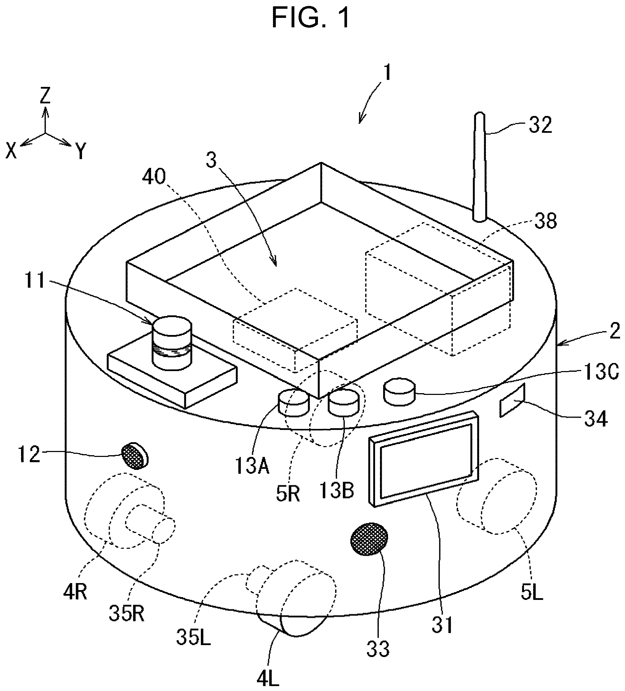

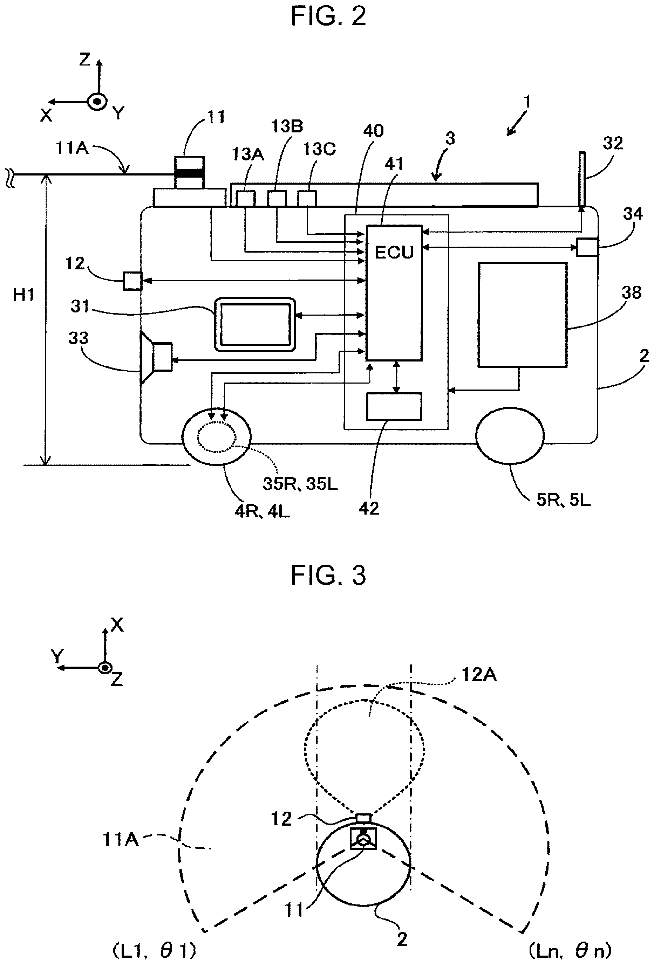

### [Appearance of autonomous travel cart (FIG. 1) and overall configuration (FIG. 2)]

The following will describe a schematic configuration of an autonomous travel cart 1 with reference to FIGS. 1 and 2. In the description of the present embodiment, as shown in FIG. 1, the autonomous travel cart 1 having a columnar shape with a predetermined diameter (e.g., a diameter of about 65 cm) will be described as an example. As shown in FIGS. 1 and 2, the autonomous travel cart 1 has a body 2, a loading platform 3, a right drive wheel 4R, a left drive wheel 4L, a right caster wheel 5R, a left caster wheel 5L, a laser range finder 11 (hereinafter referred to as LRF 11) functioning as an example of a laser obstacle detection device, an ultrasonic detection device 12 functioning as an example of an ultrasonic obstacle detection device, a main switch 13A, a dispatch switch 13B, a return switch 13C, a touch monitor 31, an antenna 32, an audio output device 33, a communication connector 34, a right motor 35R, a left motor 35L, a control circuit 40, a battery 38, and the like.

As shown in FIG. 1, the body 2 has a columnar shape, and has the loading platform 3 disposed on a top surface of the body 2 on which items are placed. The autonomous travel cart 1 travels autonomously to deliver items placed on the loading platform 3.

The right drive wheel 4R is disposed at a position of a front right wheel of the autonomous travel cart 1. A direction of the right drive wheel 4R is fixed to a straight-travel direction. The left drive wheel 4L is disposed at a position of a front left wheel of the autonomous travel cart 1. A direction of the right drive wheel 4R is fixed to a straight-travel direction. The left drive wheel 4L is driven to rotate in the forward direction or the backward direction by the left motor 35L. As shown in FIG. 2, an electronic control unit 41 (ECU) (control device) may control the right motor 35R and the left motor 35L separately and operate the autonomous travel cart 1 such that the autonomous travel cart 1 travels straight forward or backward, turns to right or left and travels forward, or pivot right or left, for example.

It is noted that a plurality of wheels may include at least one drive wheel and a turning member that allows the autonomous travel cart 1 to turn left or right. Additionally, the autonomous travel cart 1 may be configured to include three or four omni wheels, each driven independently by an electric motor, and to travel in any direction of 360 degree without changing the orientation of the body 2 by adjusting the rotational direction and the rotational speed of each omni wheel individually.

The right caster wheel 5R is a driven wheel which is disposed at a position of a rear right wheel of the autonomous travel cart 1 and whose direction is freely changed. The left caster wheel 5L is a driven wheel, which is disposed at a position of a left rear wheel of the autonomous travel cart 1 and whose direction is freely changed. The directions of the right caster wheel 5R and the left caster wheel 5L are changed depending on the movement of the autonomous travel cart 1, e.g., straight forward or backward movement, turning right or left while moving forward, or pivotal turning right or left, for example.

The LRF 11 is disposed at a front upper end of the autonomous travel cart 1. The LRF 11 is, for example, an obstacle sensor (Laser Range Finder sensor), and has a two-dimensional planar obstacle-detection flat region where a laser beam is scanned. The LRF 11 outputs detection information to the ECU 41 (see FIG. 2). The detection information includes obstacle positions that are positions of obstacles within the planar obstacle-detection region. In other words, the LRF 11 obtains the detection information including the obstacle position by emitting a laser and outputs the detection information to the ECU 41.

The ultrasonic detection device 12 is disposed at the center in a lateral direction of a front surface portion of the autonomous travel cart 1 on a lower side of the LRF 11. The ultrasonic detection device 12 is, for example, an ultrasonic sensor including a transmitter and a receiver, which are paired, and has an ultrasonic detection region 12A (see FIG. 3) having a width slightly larger than the diameter of the body 2 on opposite sides in the lateral direction thereof. The ultrasonic detection device 12 transmits an ultrasonic wave and detects the ultrasonic waves, which are reflected by an obstacle located in the ultrasonic detection region 12A and returned, and measures the propagation time of the ultrasonic waves. The ultrasonic detection device 12 calculates a distance from the autonomous travel cart 1 to the obstacle located in the ultrasonic detection region 12A using the measured propagation time, and outputs distance information including the calculated distance to the ECU 41. The ultrasonic detection device 12 need not necessarily be one, and a plurality of the ultrasonic detection devices 12 may be arranged along the circumferential direction of the body 2.

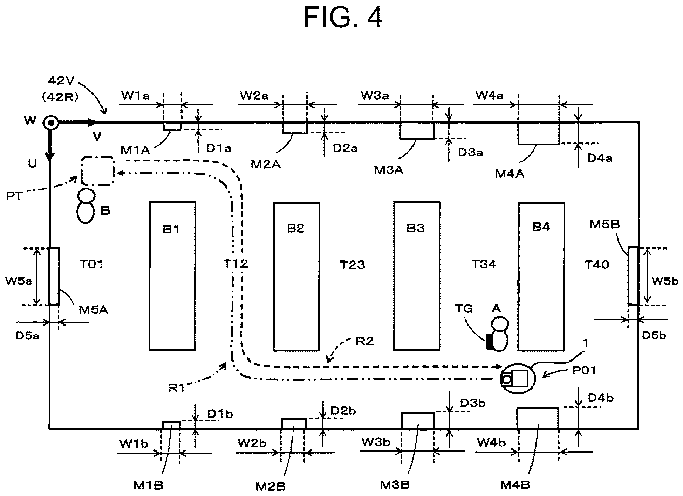

The main switch 13A is operated by an operator to start and stop the control circuit 40. The dispatch switch 13B is operated by an operator A (see FIG. 4) being at a position in an actual designated area to instruct the autonomous travel cart 1, located at an arbitrary position in the actual designated area, to travel autonomously to a target arrival position PT, e.g., an item collection location (see FIG. 4), set in the actual designated area (and in designated area map information).

The return switch 13C is a switch operated by an operator B (see FIG. 4) being at the target arrival position PT in the actual designated area to instruct the autonomous travel cart 1, located at the target arrival position PT in the actual designated area, to travel back autonomously to a place in the actual designated area where the operator A (see FIG. 4) is. It is noted that the dispatch switch 13B and the return switch 13C cannot be turned ON at the same time, and when an operator turns on the switches, the ON-state is maintained until it is released by the operator.

The touch monitor 31 is configured to display a state of the autonomous travel cart 1 such as operating state and battery charge remaining, and to receive inputs from operators. The antenna 32 is configured to perform wireless transmission and reception to search for a wireless tag TG of the operator A in the designated area. The ECU 41 is configured to search for the wireless tag TG by transmitting a response request signal to the wireless tag TG via the antenna 32 and by receiving a response signal from the wireless tag TG within an effective range via the antenna 32.

The audio output device 33 is, for example, a speaker and outputs a voice, music, a warning sound, or the like for notifying that the autonomous travel cart 1 traveling autonomously has stopped due to the presence of an obstacle such as transparent glass or resin plate which cannot be detected by the LRF 11 ahead of the autonomous travel cart 1 in the traveling direction thereof or the autonomous travel cart 1 approaching an operator or the like.

The communication connector 34 is a connector for connecting a personal computer or the like for transmitting or receiving various data or the like to or from the ECU 41. For example, an operator may store the designated area map information (information indicating the positions of obstacles in the actual designated area) stored in the personal computer in a storage device 42 (see FIG. 2) via the communication connector 34. The battery 38 is a power source to supply power to devices such as the control circuit 40 in the autonomous travel cart 1, the LRF 11, the ultrasonic detection device 12, and the like.

As shown in FIG. 2, the control circuit 40 includes the ECU 41 (control device), the storage device 42 (e.g., HDD, or hard disk drive), and the like. The ECU 41 is provided by a known electric control unit provided with a CPU, a RAM, a ROM, a timer, a backup RAM, and the like (not shown). The CPU executes various arithmetic processing based on various programs and parameters stored in the ROM. The RAM temporarily stores calculation results of the CPU, data input from each detection device, and the like, and the backup RAM stores, for example, data to be stored when the autonomous travel cart 1 is at a stop.

The ECU 41 receives, for example, the detection information from the LRF 11, the distance information from the ultrasonic detection device 12, and operational signals from the main switch 13A, the dispatch switch 13B, and the return switch 13C. Further, for example, the ECU 41 reads and writes data from and to the storage device 42, transmits and receives signals and the like via the antenna 32, outputs and inputs to and from the touch monitor 31, and outputs a drive signal to the right motor 35R and the left motor 35L.

### [Detection regions of LRF 11 and ultrasonic detection device 12]

The following will describe detection regions where the LRF 11 and the ultrasonic detection device 12 detect an obstacle with reference to FIGS. 2 and 3. FIG. 3 is a schematic plan view, showing the obstacle detection flat region 11A which is a detection region by the laser beam of the LRF 11 and the ultrasonic detection region 12A which is a detection region by the ultrasonic sensor of the ultrasonic detection device 12, as viewed from above.

As shown in FIG. 3, the LRF 11 has the two-dimensional planar obstacle detection flat region 11A (a fan-shaped region in FIG. 3) where it is scanned with a laser beam generally horizontally, and outputs the detection information including an obstacle position that is a position of obstacle within the planar obstacle-detection region to the ECU 41 (see FIG. 2). Thus, the detection information includes information on objects (obstacles), specifically, in which direction and how far the objects (obstacles) are located, and in which direction objects (obstacle) are not positioned.

The obstacle detection flat region 11A of the LRF 11 has, for example, a fan shape having a radius of about 10 meter (m) and a central angle of about 240 degree. A plurality of patterns of the obstacle detection flat regions 11A (e.g., a fan shape having a radius of about 5 (m), 10 (m), 20 (m), etc. and a central angle of about 240 degree may be set in the LRF 11 or the control circuit 40. An operator creates a plurality of patterns of the obstacle detection flat regions 11A, stores the created obstacle detection flat regions 11A in the LRF 11 or the control circuit 40 (storage device 42), and switches the obstacle detection flat region 11A from the control circuit 40.

For example, the operator starts a program for creating a detection region on a personal computer or the like and creates (selects) a desired obstacle detection flat region 11A. Then, the operator stores the obstacle detection flat region 11A, selected through the personal computer or the like, in the LRF 11 or the control circuit 40 (storage device 42) via the communication connector 34.

As shown in FIGS. 2 and 3, the LRF 11 disposed at the front upper end of the autonomous travel cart 1 detects the distance and the direction to an obstacle in the obstacle detection flat region 11A, which extends horizontally in a range of the height from a floor surface to at a height H1. For example, when the autonomous travel cart 1 is traveling, the LRF 11 scans a laser beam whose distance L is about 10 meter in a fan-shaped range having the central angle of about 240 degrees, at intervals of the central angle of 0.25 degrees at predetermined time intervals.

The LRF 11 measures the distance and direction from a laser beam irradiation port to a spot where each laser beam has hit an obstacle, as the distance L and a direction θ to the obstacle positioned frontward of the position of the autonomous travel cart 1. The measurement results (L1, θ1) to (Ln, θn) are detection information including the obstacle position around and ahead of the autonomous travel cart 1 in the traveling direction thereof.

As shown in FIG. 3, the ultrasonic detection device 12 has the three-dimensional spindle-shaped ultrasonic detection region 12A (a spindle-shaped region in FIG. 3) where ultrasonic waves propagate while gradually spreading. The ultrasonic detection device 12 outputs distance information (from the vehicle) to an object (obstacle) detected in the ultrasonic detection region 12A to the ECU 41 (see FIG. 2). That is, the distance information includes information as to how far an object (obstacle) is located ahead of the autonomous travel cart 1. In a case in which a plurality of objects (obstacles) is present in the ultrasonic detection region 12A, the distance information detected by the ultrasonic detection device 12 indicates the distance to the object positioned closest to the vehicle.

The ultrasonic detection region 12A of the ultrasonic detection device 12 has a spindle shape in which the longest measurement distance is, for example, about 5 meter (m) and the width that is slightly greater than the diameter of the body 2 in the lateral direction. Thus, the ultrasonic detection device 12 detects an object (obstacle) located outside the traveling route of the vehicle in the obstacle detection flat region 11A. In addition, the ultrasonic detection device 12 detects the distance to an obstacle, which cannot be detected by the LRF 11, such as transparent glass or resin plate, located inside the ultrasonic detection region 12A within the obstacle detection flat region 11A.

### [Example of designated area map information]

The operator can create the designated area map information using a personal computer or the like, which indicates the position of an obstacle known in advance in the actual designated area where the autonomous travel cart 1 travels autonomously, and stores the created designated area map information in the control circuit 40 (the storage device 42) (see FIG. 2) in advance via the communication connector 34.

FIG. 4 shows an example of designated area map information 42V in a case where the actual designated area is a work site of an item delivery center. The designated area map information 42V shown in FIG. 4 is a plan view of the actual designated area (work site), and indicates the position of obstacles known in advance. In the designated area map information 42V, the U-axis, the V-axis and the W-axis are orthogonal to each other. The W-axis direction indicates the vertically upward direction, the U-axis direction indicates the direction toward the front in the depth direction of an actual designated area, and the V-axis direction indicates the right direction in the width direction of the actual designated area.

The obstacles known in advance in the designated area map information 42V shown in FIG. 4 are wall surfaces on the four sides, shelves B1 to B4 on which various items are placed, and mark obstacles M1A to M5A and M1B to M5B of different sizes, which are arranged on the wall surfaces. The shelves B1 to B4 are arranged at positions away from the wall surfaces, and are arranged at appropriate intervals for operators and the autonomous travel cart 1 to enter. A space between the wall surface and each of the shelves B1 to B4 is a passage through which the autonomous travel cart 1 can travel. Narrow paths T12, T23, and T34 are formed between the adjacent shelves B1 to B4, and the autonomous travel cart 1 can travel through these passages.

The mark obstacles M1A to M5A and M1B to M5B are obstacles serving as marks for the autonomous travel cart 1 to determine a current position of the autonomous travel cart 1, and are set to different widths (Wxx) and different depths (Dxx). For example, even in a case in which the autonomous travel cart 1 is at a position close to two shelves and it is difficult to determine the position of the autonomous travel cart 1, more specifically, in a case in which it is difficult to determine that the autonomous travel cart 1 is located in the position close to the shelves B1 and B2, to the shelves B2 and B3, or to the shelves B3, the precise current position of the autonomous travel cart 1 may be easily determined if any one of the mark obstacles M1A to M5A and M1B to M5B is detected.

### [Example of method of using the autonomous travel cart 1]

The following will describe an example of a method of using the autonomous travel cart 1 when the work site of the item delivery center shown by the designated area map information 42V is set as an actual designated area with reference to FIG. 4. The following (1) to (7) are repeated in the actual designated area 42R, and the autonomous travel cart 1 travels autonomously between the operator A who works at any position and the operator B who is at a target arrival position PT (item collection location).
(1) The operator A carries the wireless tag TG, and the autonomous travel cart 1 detects the wireless tag TG, and follows the operator A so as to be within a predetermined range from the detected wireless tag TG.
(2) The operator A selects items to be delivered from a large number of items placed on the shelves B1 to B4 while moving between the shelves B1 to B4, and places the selected items on the loading platform 3 of the autonomous travel cart 1.
(3) When the amount of the items placed on the loading platform 3 of the autonomous travel cart 1 reaches a suitable quantity, the operator A instructs the autonomous travel cart 1 to travel autonomously to the target arrival position PT (item collection location). In other words, the operator A sets the dispatch switch 13B (see FIGS. 1 and 2) ON.
(4) The autonomous travel cart 1 on which the items are placed travels autonomously toward the target arrival position PT (item collection location), for example, along a travel route R1 (moving route) while avoiding obstacles in the actual designated area 42R, and stops upon arriving at the target arrival position PT (item collection location). The target arrival position PT (item collection location) is a position designated in the actual designated area 42R in advance, and the operator B stands by at the target arrival position PT (item collection location).
(5) The operator B receives items from the autonomous travel cart 1 that is stopped at the target arrival position PT (item collection location) and instructs the autonomous travel cart 1 to travel back (return) autonomously to a place where the operator A is. Thus, the operator B cancels ON of the dispatch switch 13B and turns the return switch 13C (see FIGS. 1 and 2) ON.
(6) The autonomous travel cart 1 with no item loaded on the loading platform 3 travels autonomously to the place where the operator A is for the next transport of the items, while avoiding obstacles, for example, along a travel route R2 (moving route) in the actual designated area 42R and stops when it reaches within a predetermined range from the operator A (from the wireless tag TG).
(7) The operator A cancels the autonomous travel instruction. That is, the operator A cancels ON of the return switch 13C. Then, the process returns to (1).

### [Process of the ECU 41 of the autonomous travel cart 1]

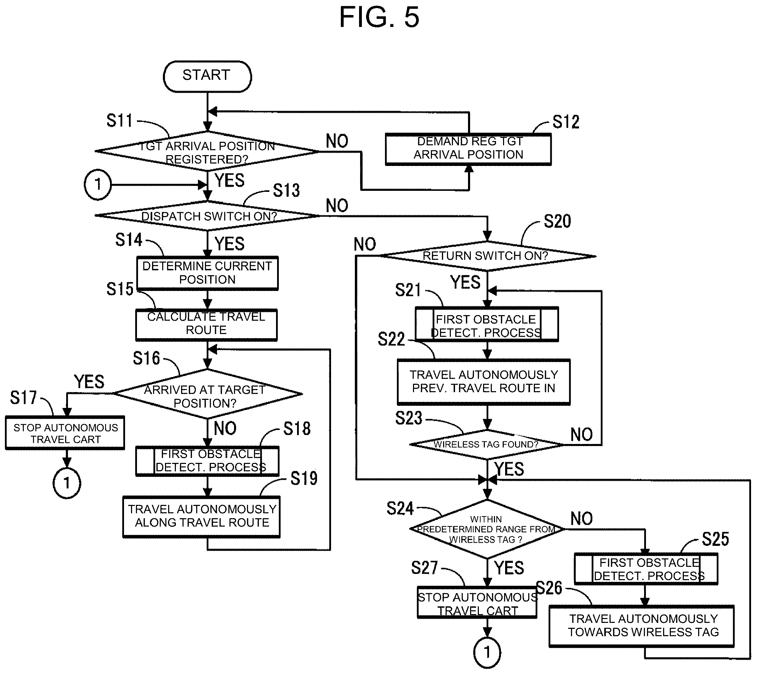

The following will describe a process executed by the ECU 41 of the autonomous travel cart 1 that achieves the method of using the autonomous travel cart 1, or the method of controlling a travel of the autonomous travel cart, including (1) to (7) with reference to FIGS. 5 to 9. For example, when the main switch 13A (see FIGS. 1 and 2) is operated, the ECU 41 starts the process shown in FIG. 5, and the process proceeds to Step S11.

At Step S11, the ECU 41 reads the designated area map information 42V stored in the storage device 42, and determines whether or not the target arrival position PT (see FIG. 4) is registered in the read designated area map information 42V. When it is determined that the target arrival position PT is not registered (NO at Step S11), the ECU 41 proceeds to Step S12. At Step S12, the ECU 41 demands the registration of the target arrival position PT, and then executes Step S 11 and the subsequent steps again.

For example, at Step S12, the ECU 41 displays the designated area map information 42V on the touch monitor 31 (see FIGS. 1 and 2), and displays "Please touch the location of the desired target arrival position". Then, the ECU 41 reads the touched position and registers the position as the target arrival position PT.

When it is determined that the target arrival position PT is registered at Step S11 (YES at Step S11), on the other hand, the ECU 41 proceeds to Step S13. At Step S13, the ECU 41 determines whether or not the dispatch switch 13B (see FIGS. 1 and 2) is turned ON by the operator A (see FIG. 4). When it is determined that the dispatch switch 13B is turned ON by the operator A (YES at Step S13), the ECU 41 proceeds to Step S14.

At Step S14, the ECU 41 determines a current position P01, which is a position of the autonomous travel cart 1 in the actual designated area 42R (and in the designated area map information 42V), based on the obstacle position included in the detection information from the LRF 11 and the designated area map information 42V stored in the storage device 42, and proceeds to Step S15.

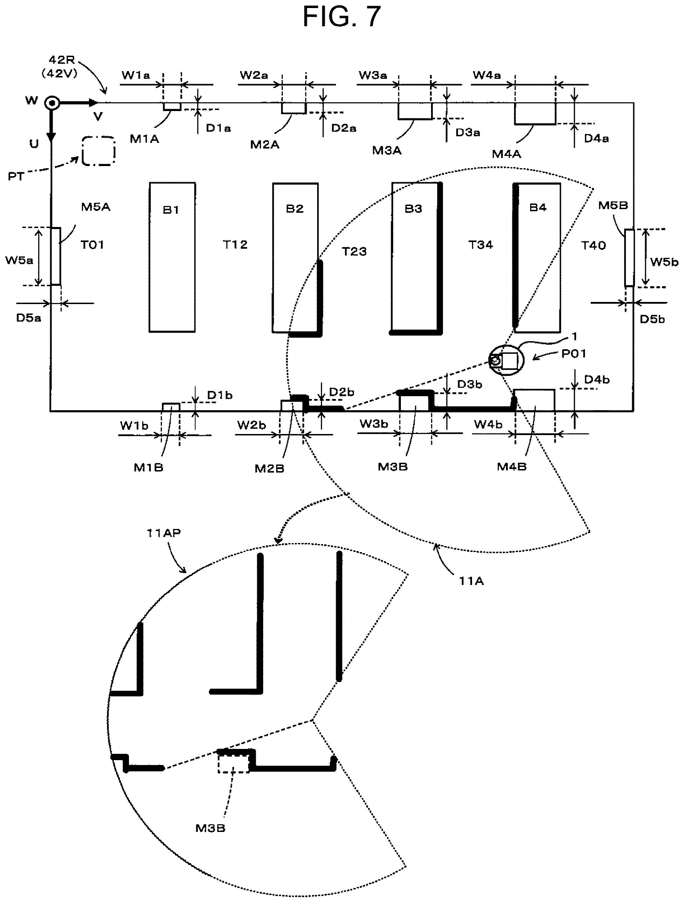

For example, as shown in FIG. 7, in the actual designated area 42R, the autonomous travel cart 1 scans an obstacle in the obstacle detection flat region 11A to obtain an obstacle position 11AP. The ECU 41 compares the obstacle position 11AP (see FIG. 7) included in the detection information with the designated area map information 42V (see FIG. 4) read from the storage device 42 using pattern matching or the like to obtain a position matching the obstacle position 11AP (see FIG. 7) in the designated area map information (see FIG. 4), and determine the obtained position as the current position. In the example shown in FIG. 7, the ECU 41 determines the current position P01 in the designated area map information 42V shown in FIG. 4 by detecting of the mark obstacle M3B.

Subsequently, at Step S15, as shown in FIG. 4, the ECU 41 calculates the travel route R1 from the current position P01 to the target arrival position PT while avoiding obstacles, based on the designated area map information 42V, the current position P01 determined at Step S14, and the target arrival position PT registered in the designated area map information 42V, stores the travel route R1 in the storage device 42, and then proceeds to Step S16. At Step S16, the ECU 41 determines whether or not the current position P01 in the designated area map information 42V reaches the target arrival position PT (whether or not the current position P01 is within a predetermined range from the target arrival position PT). In other words, the ECU 41 determines whether or not the autonomous travel cart 1 has arrived at the target position at Step S16.

When it is determined that the current position P01 in the designated area map information 42V is within the target arrival position PT (YES at Step S16), the ECU 41 proceeds to Step S17. At Step S17, the ECU 41 stops driving of the right motor 35R and the left motor 35L to stop traveling of the autonomous travel cart 1, and executes Step S13 and the subsequent Steps again. When the autonomous travel cart 1 reaches the target arrival position PT and stops (at Step S17), the operator B shown in FIG. 4 receives the items placed on the loading platform 3, cancels ON of the dispatch switch 13B, and turns ON the return switch 13C.

When it is determined that the current position P01 in the designated area map information 42V is not within the target arrival position PT at Step S16 (NO at Step S16), on the other hand, the ECU 41 proceeds to Step S18. At Step S18, the ECU 41 executes a sub-process of "a first obstacle detection process", which will be described later, and proceeds to Step S19. At Step S19, the ECU 41 causes the autonomous travel cart 1 to travel autonomously at a normal speed (e.g., about 4 km/h) along the travel route R1 (see FIG. 4) by controlling the right motor 35R and the left motor 35L while updating the current position P01 in the designated area map information 42V and avoiding obstacles, and, then, executes Step S16 and the subsequent Steps again. In other words, the autonomous travel cart 1 travels autonomously in accordance with the travelling route.

When it is determined that the dispatch switch 13B is not turned ON by the operator A at Step S13, that is, when it is determined that ON of the dispatch switch 13B is cancelled (NO at Step S13), the ECU 41 proceeds to Step S20. At Step S20, the ECU 41 determines whether or not the return switch 13C (see FIGS. 1 and 2) is turned ON by the operator B (see FIG. 4). When it is determined that the return switch 13C is turned ON by the operator B (YES at Step S20), the ECU 41 proceeds to Step S21.

At Step S21, the ECU 41 executes the sub-process of "the first obstacle detection process", which will be described later, and then proceeds to Step S22. At Step S22, the ECU 41 reads the previous travel route R1 stored in the storage device 42, determines the travel route R2 (see FIG. 4) from the target arrival position PT to the current position P01 obtained at Step S14 by following this travel route R1 in reverse, and stores the travel route R2 in the storage device 42. Subsequently, the ECU 41 causes the autonomous travel cart 1 to travel autonomously at a normal speed (for example about 4 km/h) along the travel route R2 (see FIG. 4) by controlling the right motor 35R and the left motor 35L while updating the current position P01 in the designated area map information 42V and avoiding obstacles, and proceeds to Step S23.

At Step S23, the ECU 41 determines whether the wireless tag TG (see FIG. 4) is found (detected). When it is determined that the wireless tag TG is not found (detected) (NO at Step S23), the ECU 41 executes Step S21 and the subsequent Steps again. During the autonomous travelling of the autonomous travel cart 1, the ECU 41 may find the wireless tag TG by transmitting a response request signal to the wireless tag TG wirelessly and receiving a response signal from the wireless tag TG wirelessly via the antenna 32 (see FIGS. 1 and 2) wirelessly.

On the other hand, when it is determined that the wireless tag TG has been found (detected) (YES at Step S23), the ECU 41 proceeds to Step S24. At Step S24, the ECU 41 determines whether or not the current position of the autonomous travel cart 1 is within a predetermined range (e.g., within a radius of 1 meter) from the wireless tag TG based on the radio wave intensity and the like from the wireless tag TG. When it is determined that the current position of the autonomous travel cart 1 is not within the predetermined range from the wireless tag TG (NO at Step S24), the ECU 41 proceeds to Step S25.

At Step S25, the ECU 41 executes the sub-processing of the first obstacle detection process, which will be described later, and proceeds to Step S26. At Step S26, the ECU 41 causes the autonomous travel cart 1 to travel autonomously towards the found wireless tag TG at a normal speed (e.g., about 4 km/h) while updating the current position P01 in the designated area map information 42V and avoiding obstacles, and, then, executes Step S24 and the subsequent Steps again.

When it is determined that the current position of the autonomous travel cart 1 is within the predetermined range from the wireless tag TG (YES at Step S24), on the other hand, the ECU 41 proceeds to Step S27. At Step S27, the ECU 41 stops traveling of the autonomous travel cart 1 by stopping driving of the right motor 35R and the left motor 35L, and, then, executes Step S13 and the subsequent Steps again. It is noted that the operator A cancels ON of the return switch 13C when the autonomous travel cart 1 returns to the place where the operator A shown in FIG. 4 is and then stops (At Step S27).

In a case where it is determined that the return switch 13C is not turned ON by the operator B at Step S20, that is, when it is determined that ON of the return switch 13C is cancelled (NO at Step S20), the ECU 41 executes Step S24 and the subsequent Steps. In other words, the autonomous travel cart 1 travels to a position within a predetermined range (e.g., within a radius of 1 meter) from the wireless tag TG and stops. Accordingly, the autonomous travel cart 1 travels following the operator A who carries the wireless tag TG and stops at a position within a predetermined range (e.g., within a radius of 1 meter).

The operator A shown in FIG. 4 selects items, which are desired to be transported to the target arrival position PT, from the shelves B3 and B4 and places the selected items on the loading platform 3 of the autonomous travel cart 1 following the operator A. After a suitable quantity of the items placed on the autonomous travel cart 1, the operator A turns the dispatch switch 13B ON. In other words, the operator A instructs the autonomous travel cart 1 to travel autonomously to the target arrival position PT (item collection location). Thus, the autonomous travel cart 1 executes autonomous travel to the target arrival position PT (item collection location) again.

### [Details of the first obstacle detection process]

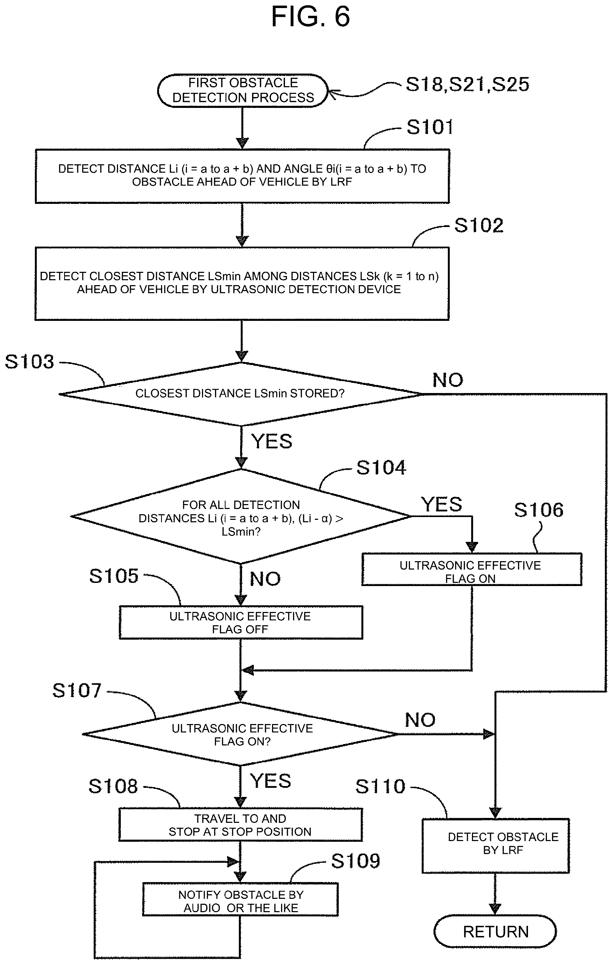

The following will describe the sub-process of the first obstacle detection process executed by the ECU 41, at Steps S18, S21, and S25 with reference to FIGS. 6, 8 and 9.

As shown in FIG. 6, firstly, at Step S101, the ECU 41 causes the LRF 11 to scan a laser beam at a predetermined pitch angle in the fan-shaped obstacle detection flat region 11A of the central angle of 240 degrees. The ECU 41 stores the measurement results of the detection distance Li and an angle θi, which are obtained by scanning with laser beam at the predetermined pitch angle in a fan-shaped detection flat region 11AX including the ultrasonic detection region 12Aof the ultrasonic detection device 12 having the width greater than the diameter of the body 2 in the lateral direction in the obstacle detection flat region 11A as the detection information in the RAM (not shown). Therefore, when an obstacle reflecting the laser beam is present ahead of the autonomous travel cart 1 in the traveling direction thereof, the detection information includes the obstacle position (Li, θi), which is the position of the obstacle. It is noted that the distance from the autonomous travel cart 1 to the obstacle located ahead (forward) of the autonomous travel cart 1 in the travelling direction thereof obtained with the LRF 11 corresponds to the first distance according to the present disclosure. Additionally, the ECU 41 serves as a first distance acquisition unit that acquires the first distance based on the detection information from the laser obstacle detection device.

For example, as shown in FIG. 8, the ECU 41 scans a laser beam whose distance L is about 10 m, for example, at intervals of the central angle of 0.25 degree (0.25-degree pitch) at predetermined time intervals, in the fan-shaped obstacle detection flat region 11A having a central angle of 240 degrees with the LRF 11. The ECU 41 stores, in the RAM (not shown), measurement results of the detection distance Li and the angle θi, ranging from (La, θa) to (La + b, θa + b), as the detection information, which are obtained by scanning the laser beam whose distance L is about 10 m, at a 0.25-degree pitch in the fan-shaped detection flat region 11AX from the angle θa to the angle θa + b, i.e., θi(i = a to a + b), which is slightly wider than the ultrasonic detection region 12A of the ultrasonic detection device 12 on both sides in the obstacle detection flat region 11A. Therefore, when an obstacle 51 reflecting a laser beam is located ahead of the autonomous travel cart 1 in the traveling direction thereof in the detection flat region 11AX, the detection information includes an obstacle position (La + 1, θa + 1) which is the position of the obstacle 51 reflecting the laser beam.

Then, at Step S102, the ECU 41 causes the ultrasonic detection device 12 to detect the closest distance LSmin among the distances LSk (k = 1 to n, n corresponding to the number of obstacles) to obstacles located in the ultrasonic detection region 12A ahead of the vehicle, and stores the closest distance LSmin as distance information in the RAM (not shown). The furthest measurable distance of the ultrasonic detection device 12 is, for example, about 5 m and is set at a distance shorter than the length of the laser beam of the LRF 11. For example, the length of the laser beam from the LRF 11 is about 10 meter. It is noted that the distance from the autonomous travel cart 1 to the obstacle located ahead in the travelling direction of the autonomous travel cart 1 obtained with the ultrasonic detection device 12 corresponds to the second distance according to the present disclosure. Additionally, the ECU 41 serves as a second distance acquisition unit that acquires the second distance based on the distance information from the ultrasonic obstacle detection device.

In a case in which the obstacle 51 reflecting the laser beam is located in the ultrasonic detection region 12A outside the traveling path, and an obstacle 52 such as a transparent glass plate and a transparent resin plate such as polycarbonate reflecting no laser beam, is located closer than the obstacle 51 is in the ultrasonic detection region 12A inside the traveling path, as shown in FIG. 9, the ECU 41 detects the distance LS2 that is closer to the autonomous travel cart 1 of the distance LS1 to the obstacle 51 and the distance LS2 to the obstacle 52 by the ultrasonic detection device 12. Then, the ECU 41 stores the distance LS2 as the closest distance LSmin (distance information) in the RAM (not shown).

Subsequently, at Step S103, the ECU 41 determines whether or not the closest distance LSmin among the distances LSk (k = 1 to n, n corresponding to the number of obstacles) to the obstacles is stored in the RAM at Step S102. When it is determined that the closest distance LSmin among the distances LSk (k = 1 to n, n is the number of obstacles) to the obstacles is not stored in the RAM at Step S103, that is, when it is determined that there is no obstacle (NO at Step S103), the ECU 41 proceeds to Step S110, which will be described later.

On the other hand, when it is determined that the closest distance LSmin among the distances LSk (k = 1 to n, n corresponding to the number of obstacles) to the obstacles is stored in the RAM at Step S102, that is, when it is determined that there is an obstacle (YES at Step S103), the ECU 41 proceeds to Step S104.

At Step S104, the ECU 41 reads the measurement results of the detection distance Li (i = a to a + b) scanned at the predetermined pitch angle with the LRF 11 in the fan-shaped detection flat region 11AX frontward of the vehicle stored in the RAM at Step S101 in sequence. Then, for each of all the detection distances Li (i = a to a + b), the ECU 41 determines whether or not each of the calculated distances (Li - α) obtained by subtracting a variation in measurement α (e.g., a deviation value of a measurement distance) of the ultrasonic detection device 12 from the detection distances Li is greater than the closest distance LSmin. It is noted that the ECU 41 serves as the first distance determination unit that determines whether or not the calculated distance obtained by subtracting a predetermined subtraction distance from the first distance is greater than the second distance. The subtraction distance is a variation in measurement of the distance from the vehicle to the obstacle detected by the ultrasonic detection device. The variation in measurement α (e.g., the deviation value of the measurement distance) of the ultrasonic detection device 12 is stored in advance in the ROM (not shown) or the storage device 42 (memory device).

When it is determined that any of the calculated distances (L1 - α) that are calculated by subtracting the variation in measurement α (e.g., the deviation value of the measurement distance) of the ultrasonic detection device 12 from the detection distances Li (i = a to a + b) is equal to or less than the closest distance LSmin (NO at Step S105), the ECU 41 proceeds to Step S105. That is, the ECU 41 determines that the obstacle at the closest distance LSmin detected by the ultrasonic detection device 12 is an obstacle detectable by the LRF 11 (NO at Step S104), and proceeds to Step S105. In other words, the ECU 41 serves as the detection determiner that determines whether or not the obstacle detected by the ultrasonic obstacle detection device is detected by the laser obstacle detection device based on the detection information from the laser obstacle detection device and the distance information from the ultrasonic obstacle detection device.

For example, as shown in FIG. 8, when the obstacle 51 reflecting the laser beam is located in the ultrasonic detection region 12A outside the traveling path, the distance LS1 to the obstacle 51 detected by the ultrasonic detection device 12, i.e., the closest distance LSmin, is substantially the same as a detection distance La + 1 to the obstacle 51 detected by the LRF 11. Thus, the calculated distance (La + 1 - α) obtained by subtracting the variation in measurement α (e.g., the deviation value of the measurement distance) of the ultrasonic detection device 12 from the detection distance La + 1 is equal to or less than the closest distance LSmin (distance LS1).

Accordingly, the ECU 41 determines that among all the detection distances Li (i = a to a + b), there is the detection distance La + 1 that is equal to or less than the closest distance LSmin (NO at S104), that is, the position of the obstacle 51 is detected by the LRF 11, the ECU 41 proceeds to Step S105. It is noted that the variation in measurement α (e.g., the deviation value of the measurement distance) of the ultrasonic detection device 12 is, for example, about 100 mm. Further, the variation in measurement of the LRF 11 is, for example, about several mm to 10 mm.

As shown in FIG. 6, the ECU 41 reads the ultrasonic effective flag from the RAM (not shown) at Step S105, sets the ultrasonic effective flag "OFF", stores the ultrasonic effective flag again in the RAM, and proceeds to Step S107, which will be described later. It is noted that the ultrasonic effective flag is set "OFF" at the activation of the ECU 41, and is stored in the RAM.

On the other hand, when it is determined that among all the detection distances Li (i = a to a + b), the calculated distance (Li - α) obtained by subtracting the variation in measurement α (e.g., the deviation value of the measurement distance) of the ultrasonic detection device 12 from each of the detection distances Li is greater than the closest distance LSmin at Step S104, (YES at Step S104), the ECU 41 proceeds to Step S106. In other words, the ECU 41 determines that the obstacle at the closest distance LSmin detected by the ultrasonic detection device 12 is an obstacle which cannot be detected by the LRF 11 (YES at Step S104), and proceeds to Step S106.

For example, in a case where there are the obstacle 51 reflecting the laser beam and the obstacle 52 such as transparent glass or resin plate reflecting no laser beam that is located closer to the vehicle than the obstacle 51 is in the ultrasonic detection region 12A, the ECU 41 detects the distance LS2, out of the distance LS1 to the obstacle 51 and the distance LS2 to the obstacle 52, positioned closer to the vehicle by the ultrasonic detection device 12.

Then, the ECU 41 sets the distance LS2 as the closest distance LSmin (distance information). The closest distance LSmin (distance L2) to the obstacle 52 detected by the ultrasonic detection device 12 is smaller than a detection distance La + c detected by the LRF 11. For example, since the distance LS1 to the obstacle 51 is 3 meter, and the distance LS2 to the obstacle 52 is about 1 meter, the ultrasonic detection device 12 detects the distance LS2 as the closest distance LSmin. As a result, the closest distance LSmin stored in the RAM by the ECU 41 is the distance LS2 to the obstacle 52, that is, about 1 meter. The detection distance La + 1 detected by the LRF 11 is about 3 meter, and the detection distance La + c is about 10 meter.

Accordingly, the ECU 41 determines that among all the detection distances Li (i = a to a + b), the calculated distance (Li - α) obtained by subtracting the variation in measurement α (e.g., the deviation value of the measurement distance) (e.g., about 100 mm) of the ultrasonic detection device 12 from each of the detection distances Li is greater than the closest distance LSmin (distance L2) (YES at Step S104), that is, the position of the obstacle 52 is not detected by the LRF11, the ECU 41 proceeds to Step S106. The ECU 41 serves as the detection determiner that determines that the obstacle detected by the ultrasonic obstacle detection device is not detected by the laser obstacle detection device when the first distance determination unit determines that the calculated distance is greater than the second distance, and determines that the obstacle detected by the ultrasonic obstacle detection device is detected by the laser obstacle detection device when the first distance determination unit determines that the calculated distance is equal to or less than the second distance.

As shown in FIG. 6, at Step S106, the ECU 41 reads the ultrasonic effective flag from the RAM (not shown), sets the ultrasonic effective flag "ON", stores the ultrasonic effective flag again in the RAM, and then proceeds to Step S107.

At Step S107, the ECU 41 reads the ultrasonic effective flag from the RAM (not shown), and determines whether or not the ultrasonic effective flag is set "ON". In other words, the ECU 41 determines whether or not an obstacle, which cannot be detected by the LRF 11, is present ahead in the traveling direction. When it is determined that the ultrasonic effective flag is "ON", that is, when it is determined that the obstacle which cannot be detected by the LRF 11 is present ahead in the traveling direction (YES at Step S107), the ECU 41 proceeds to Step S108.

At Step S108, when the distance LSmin to the closest obstacle detected by the ultrasonic detection device 12 is equal to or less than a preset stop distance LSS (e.g., a distance of about 50 cm), the ECU 41 stops driving of the right motor 35R and the left motor 35L to stop traveling of the autonomous travel cart 1 That is, the ECU 41 controls the traveling so that the autonomous travel cart 1 travels to and stops at a stop position in front of the obstacle which cannot be detected by the LRF 11.

Subsequently, at Step S109, the ECU 41 displays that an obstacle cannot be detected by the LRF 11 is present ahead in the traveling direction, and a warning stop button on the touch monitor 31. At the same time, the ECU 41 causes the audio output device 33 to provide audio guidance that notifies of the presence of the obstacle cannot be detected by the LRF 11 ahead in the traveling direction until the warning stop button displayed on the touch monitor 31 is pressed. When the warning stop button displayed on the touch monitor 31 is pressed, the ECU 41 stops audio guidance by the audio output device 33.

In a case where a detour that permits avoiding an obstacle, which cannot be detected by the LRF 11, ahead in the travelling direction may be set based on the designated area map information 42V, the ECU 41 may be configured to execute the travelling control so that the ECU 41 resets a detour travel route, ends the sub-process without executing Step S109 and, returns to the main process shown in the flow chart in FIG. 5. Alternatively, the ECU 41 may be configured to executes the travelling control so that the ECU 41 performs a process through which the vehicle makes a detour around the obstacle with a predetermined distance to the obstacle based on the measurement results by the ultrasonic detection device 12, ends the sub-process, and returns to the main process shown in the flow chart in FIG. 5 without executing Step S109.

When it is determined that the ultrasonic effective flag is OFF, that is, when it is determined that an obstacle cannot be detected by the LRF 11 is not present ahead in the traveling direction at Step S107 (NO at Step S107), the ECU 41 proceeds to Step S110. At Step S110, the ECU 41 detects the obstacle position, which is the position of the obstacle ahead in the traveling direction, by the LRF 11, stores the obstacle position in the RAM, ends the sub-process, and returns to the main process shown in the flow chart in FIG. 5.

As has been described in detail, in the autonomous travel cart 1 according to the present embodiment, for each of all the detection distances Li (i = a to a + b) measured by scanning a laser beam at a predetermined pitch angle by the LRF 11 in the fan-shaped detection flat region 11AX frontward of the vehicle, the ECU 41 calculates the calculated distance (Li - α) obtained by subtracting the variation in measurement α (e.g., the deviation value of the measurement distance) of the ultrasonic detection device 12 from the detection distances Li. Then, the ECU 41 determines whether or not all the calculated distances (Li - α) (i = a to a + b) are greater than the closest distance LSmin among the distances LSk (k = 1 to n, n is the number of obstacles) to each obstacle detected by the ultrasonic detection device 12.

When the ECU 41 determines that all the calculated distances (Li - α) (i = a to a + b) are greater than the closest distance LSmin among the distances LSk (k = 1 to n, n is the number of obstacles) to each obstacle detected by the ultrasonic detection device 12, the ECU 41 determines that an obstacle made of transparent glass or resin, which cannot be detected by the LRF 11 is present ahead in the traveling direction. After the autonomous travel cart 1 travels to the stop position where the distance LSmin to the closest obstacle detected by the ultrasonic detection device 12 becomes the preset stop distance LSS, the ECU 41 stops the right motor 35R and the left motor 35L to stop the traveling of the autonomous travel cart 1.

Accordingly, the autonomous travel cart 1 can precisely stop traveling and make a detour based on the distance LSmin to the closest obstacle detected by the ultrasonic detection device 12 by reliably detecting an obstacle made of transparent glass or resin, which cannot be detected by the LRF 11, ahead in the traveling direction.

When the ECU 41 determines that, among all the calculated distances (Li - α) (i = a to a + b), there is the calculated distance (Li - α) equal to or less than the distance LSmin to the closest obstacle detected by the ultrasonic detection device 12, the ECU 41 detects the obstacle position, which is the position of an obstacle present ahead in the traveling direction, by the LRF 11 and continues the autonomous travel. Accordingly, the ECU 41 can control the travelling of the autonomous travel cart 1 by detecting the position of an obstacle ahead in the traveling direction by the LRF 11 with high accuracy. The ECU 41 serves as the travel controller executing a travel control based on the detection information from the laser obstacle detection device when the detection determiner determines that the obstacle detected by the ultrasonic obstacle detection device is detected by the laser obstacle detection device, and executing the travel control based on the distance information from the ultrasonic obstacle detection device when the detection determiner determines that the obstacle detected by the ultrasonic obstacle detection device is not detected by the laser obstacle detection device.

The autonomous travel cart of the present disclosure is not limited to the above-described configuration, structure, shape, and process, but may be modified, added or omitted in various manners within the scope of the present disclosure. In the following description, the same reference numerals as those in the autonomous travel cart 1 according to the above embodiment in FIGS. 1 to 9 denote the same or equivalent portions.

### [Modified first embodiment]

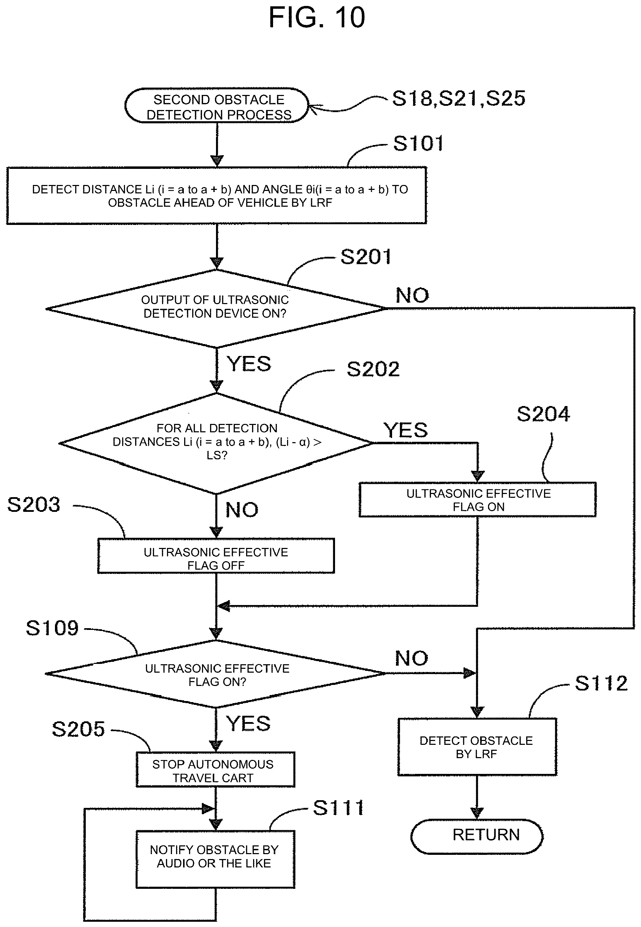

(A) For example, the sub-process of the first obstacle detection process executed at Steps S18, S21 and S25 may be replaced with a second obstacle detection process" shown in FIG. 10. This second obstacle detection process differs from the first obstacle detection process in that the ultrasonic detection device 12 does not output the distance information including the calculated distance to the ECU 41, through the ultrasonic detection device 12 calculates the distance from the autonomous travel cart 1 to the obstacle in the ultrasonic detection region 12A using the measured propagation time of the ultrasonic waves.

However, the ultrasonic detection device 12 is configured to output an ON signal indicating that an obstacle is detected, to the ECU 41 when the calculated distance is equal to or less than a preset distance LS (e.g., 1 meter or less). In addition, the ultrasonic detection device 12 is configured to output an OFF signal to the ECU 41 when the calculated distance is greater than the preset distance LS (e.g., greater than 1 m), or when the ultrasonic detection device 12 detects no obstacle.

The following will describe a sub-process of the second obstacle detection processing with reference to FIG. 10. As shown in FIG. 10, the ECU 41 executes Step S101 first and proceeds to Step S201. At Step S201, the ECU 41 determines whether or not the "ON" signal has been input from the ultrasonic detection device 12. When it is determined that the "OFF" signal has been input from the ultrasonic detection device 12 (NO at Step S201), the ECU 41 executes Step S112, ends the sub-process, and returns to the main process shown in the flow chart in FIG. 5.

In other words, the ECU 41 determines that the ultrasonic detection device 12 detects no obstacle within the preset distance LS (e.g., within 1 meter) ahead in the traveling direction (NO at Step S201), detects the obstacle position which is the position of an obstacle ahead in the traveling direction by the LRF 11 and stores the detected obstacle position in the RAM, ends the sub-process, and returns to the main process shown in the flow chart in FIG. 5.

When it is determined that the "ON" signal has been input from the ultrasonic detection device 12 (YES at Step S201), on the other hand, the ECU 41 proceeds to Step S202. In other words, the ECU 41 determines that the ultrasonic detection device 12 detects an obstacle located away by the preset distance LS (e.g., 1 meter) ahead in the traveling direction (YES at Step S201), and proceeds to Step S202.

At Step S202, the ECU 41 reads the measurement results of the detection distances Li (i = a to a + b) scanned at the predetermined pitch angle with the LRF 11 in the fan-shaped detection flat region 11AX ahead in the vehicle stored in the RAM (not shown) at Step S101 in sequence. Then, for each of all the detection distances Li (i = a to a + b), the ECU 41 determines whether or not each of the calculated distances (Li - α) obtained by subtracting a variation in measurement α (e.g., the deviation value of the measurement distances) of the ultrasonic detection device 12 from the detection distances Li is greater than the preset distance LS (e.g., 1 meter). In other words, the ECU 41 serves as the second distance determination unit that determines whether or not a calculated distance obtained by subtracting the predetermined subtraction distance from the first distance is greater than the preset distance.

When it is determined that any of the calculated distances (L1 - α) that are calculated by subtracting the variation in measurement α (e.g., the deviation value of the measurement distances) of the ultrasonic detection device 12 from the detection distances Li (i = a to a + b) is equal to or less than the preset distance LS (e.g., 1 meter) (NO at Step S202), the ECU 41 proceeds to Step S203. In other words, the ECU 41 determines that the obstacle that is located at the position away from the vehicle by the preset distance LS (e.g., within 1 meter) detected by the ultrasonic detection device 12 is an obstacle that can be detected by the LRF 11 (NO at Step S202), and proceeds to Step S105.

At Step S203, the ECU 41 reads the ultrasonic effective flag from the RAM (not shown), sets the ultrasonic effective flag "OFF", stores the ultrasonic effective flag again in the RAM, and executes Step S109 and the subsequent Steps. Accordingly, the ECU 41 detects the obstacle position, which is the position of the obstacle ahead in the traveling direction, by the LRF 11, stores the detection information in the RAM (NO at Step S109, then Step S112), ends the sub-process, and returns to the main process shown in the flow chart in FIG. 5.

On the other hand, when it is determined that any of the calculated distances (L1 - α) that are calculated by subtracting the variation in measurement α (e.g., the deviation value of the measurement distances) of the ultrasonic detection device 12 from the detection distances Li (i = a to a + b) is greater than the preset distance LS (e.g., 1 meter) at Step S202 (YES at Step S202), the ECU 41 proceeds to Step S204. In other words, the ECU 41 determines that the obstacle that is located at the position away from the vehicle by the preset distance LS (e.g., within 1 meter) detected by the ultrasonic detection device 12 is an obstacle that is not detectable by the LRF 11 (YES at Step S202), and proceeds to Step S204.

At Step S204, the ECU 41 reads the ultrasonic effective flag from the RAM (not shown), sets the ultrasonic effective flag "ON", stores the ultrasonic effective flag again in the RAM, and then executes Step S109 and the subsequent Steps. When it is determined that the ultrasonic effective flag is "ON", that is, when it is determined that the obstacle, which cannot be detected by the LRF 11, is ahead in the traveling direction (YES at Step S109), the ECU 41 proceeds to Step S205. At Step S205, the ECU 41 stops the right motor 35R and the left motor 35L to stop traveling of the autonomous travel cart 1. Subsequently, the ECU 41 may be configured to execute the Step S111.

In a case where a detour that permits avoiding an obstacle, which cannot be detected by the LRF 11, ahead in the travelling direction may be set based on the designated area map information 42V, the ECU 41 may be configured to reset the detour travel route, end the sub-process without executing Step S109, and returns to the main process shown in the flow chart in FIG. 5.

Accordingly, the autonomous travel cart 1 can precisely stop traveling and make a detour by reliably detecting an obstacle made of transparent glass or resin, which cannot be detected by the LRF 11, by the ultrasonic detection device 12 within the range of the preset distance LS ahead in the traveling direction. It is to be noted that the ECU 41 serves as the detection determiner, the travel controller, the fist distance acquisition unit, the second distance acquisition unit, the first distance determination unit, and the second distance determination unit of the present disclosure.

### [Second embodiment]

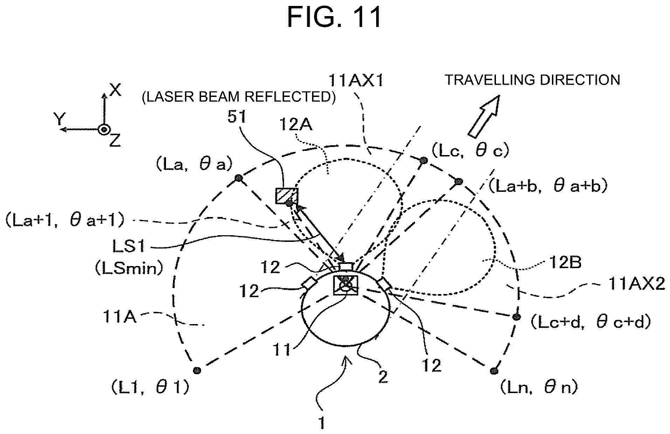

(B) For example, as shown in FIG. 11, the autonomous travel cart 1 may include three ultrasonic detection devices 12 that are arranged in the body 2 of the autonomous travel cart 1 at the center in the lateral direction of the front surface portion on the lower side of the LRF 11 and at positions with central angles of about 45 degrees on both sides in the circumferential direction of the body 2 of the autonomous travel cart 1. Instead of the drive wheels 4R and 4L and the caster wheels 5R and 5L, the autonomous travel cart 1 may be configured to include three or four omni wheels, each driven independently by an electric motor, and to move in any direction such as forward and diagonally forward right or left without changing the orientation of the body 2.

Instead of the drive wheels 4R and 4L and the caster wheels 5R and 5L, the autonomous travel cart 1 may be configured to include three or four omni wheels, each driven independently by an electric motor, and to travel in any direction such as forward and diagonally forward right or left without changing the orientation of the body 2. As shown in FIG. 11, for example, when the autonomous travel cart 1 travels in a diagonally forward right direction, firstly, the ECU 41 executes Steps S101 to S106 in the fan-shaped detection flat region 11AX1 from the angle θa to the angle θa + b frontward of the vehicle and disposed at the center in the lateral direction of a front surface portion of the body 2 on the lower side of the LRF 11, which is slightly wider on both sides in the lateral direction than the ultrasonic detection region 12A of the ultrasonic detection device 12.

Then, the ECU 41 may execute the processing of steps S101 to S106 in a fan-shaped detection flat region 11AX2 from an angle θc to an angle θc + d disposed frontward of the vehicle on the right side in the circumferential direction with respect to the center in the lateral direction of the front surface portion of the body 2, which is slightly wider on both sides in the lateral direction than the ultrasonic detection region 12A of the ultrasonic detection device 12. Then, the ECU 41 executes Steps S107 to S110.

As a result, since the autonomous travel cart 1 is provided with the LRF 11 and the plurality of ultrasonic detection devices 12, even if the autonomous travel cart 1 travels in any direction such as forward and diagonally forward right or left without changing the orientation of the body 2, an obstacle, which is formed of transparent glass or resin and which cannot be detected by the LRF 11, is present ahead in the traveling direction may be reliably detected. Further, the autonomous travel cart 1 can precisely stop traveling and make a detour based on the closest distance LSmin among the distances LSk (k = 1 to n, n is the number of obstacles) to obstacles detected by the ultrasonic detection device 12. Furthermore, the ECU 41 can execute the travelling control by detecting the position of an obstacle ahead in the traveling direction detectable by the LRF 11.

An autonomous travel cart (1) includes a control device that determines whether or not an obstacle detected by an ultrasonic obstacle detection device (12) is detected by a laser obstacle detection device (11) based on a detection information from the laser obstacle detection device (11) and a distance information from the ultrasonic obstacle detection device (12). The control device executes a travel control based on the detection information when it is determined the obstacle detected by the ultrasonic obstacle detection device (12) is detected by the laser obstacle detection device (11), and executes the travel control based on the distance information when it is determined that the obstacle detected by the ultrasonic obstacle detection device (12) is not detected by the laser obstacle detection device (11).

## Claims

1. An autonomous travel cart (1) travelling autonomously in accordance with a moving route, the autonomous travel cart (1) comprising:
a laser obstacle detection device (11) obtaining a detection information including an obstacle position by emitting a laser beam, and outputting the detection information;
an ultrasonic obstacle detection device (12) transmitting an ultrasonic wave and obtaining a distance information from the autonomous travel cart (1) to an obstacle around the autonomous travel cart (1) and outputting the distance information; and
a control device controlling the autonomous travel cart (1) to travel autonomously based on the detection information from the laser obstacle detection device (11) and the distance information from the ultrasonic obstacle detection device (12), **characterized in that**
the control device includes:
a detection determiner that determines whether or not the obstacle detected by the ultrasonic obstacle detection device (12) is detected by the laser obstacle detection device (11) based on the detection information from the laser obstacle detection device (11) and the distance information from the ultrasonic obstacle detection device (12); and
a travel controller executing a travel control based on the detection information from the laser obstacle detection device (11) when the detection determiner determines that the obstacle detected by the ultrasonic obstacle detection device (12) is detected by the laser obstacle detection device (11), and executing the travel control based on the distance information from the ultrasonic obstacle detection device (12) when the detection determiner determines that the obstacle detected by the ultrasonic obstacle detection device (12) is not detected by the laser obstacle detection device (11).

2. The autonomous travel cart (1) according to claim 1, **characterized in that** the detection determiner includes:
a first distance acquisition unit that acquires a first distance from the autonomous travel cart (1) to the obstacle positioned in a moving direction of the autonomous travel cart (1) based on the detection information from the laser obstacle detection device (11);
a second distance acquisition unit that acquires a second distance from the autonomous travel cart (1) to the obstacle positioned in the moving direction of the autonomous travel cart (1) based on the distance information from the ultrasonic obstacle detection device (12);
a memory device that stores a predetermined subtraction distance; and
a first distance determination unit that determines whether or not a calculated distance obtained by subtracting the predetermined subtraction distance from the first distance is greater than the second distance,
the detection determiner determines that the obstacle detected by the ultrasonic obstacle detection device (12) is not detected by the laser obstacle detection device (11) when the first distance determination unit determines that the calculated distance is greater than the second distance, and
the detection determiner determines that the obstacle detected by the ultrasonic obstacle detection device (12) is detected by the laser obstacle detection device (11) when the first distance determination unit determines that the calculated distance is equal to or less than the second distance.

3. The autonomous travel cart (1) according to claim 1, **characterized in that**
the ultrasonic obstacle detection device (12) obtains a second distance from autonomous travel cart (1) to the obstacle positioned in the moving direction of the autonomous travel cart (1) based on the distance information, wherein the ultrasonic obstacle detection device (12) outputs a signal indicating that the obstacle is detected, instead of outputting the distance information, when the second distance is equal to or less than a preset distance, or outputs a signal indicating that the obstacle is not detected, instead of outputting the distance information, when the second distance is greater than the preset distance,
the detection determiner includes:
a first distance acquisition unit that acquires a first distance from the autonomous travel cart (1) to the obstacle positioned in a moving direction of the autonomous travel cart (1) based on the detection information from the laser obstacle detection device (11);
a memory device that stores a predetermined subtraction distance; and
a second distance determination unit that determines whether or not a calculated distance obtained by subtracting the predetermined subtraction distance from the first distance is greater than the preset distance,
the detection determiner determines that the obstacle detected by the ultrasonic obstacle detection device (12) is not detected by the laser obstacle detection device (11) when the second distance determination unit determines that the calculated distance is greater than the preset distance, and
the detection determiner determines that the obstacle detected by the ultrasonic obstacle detection device (12) is detected by the laser obstacle detection device (11) when the second distance determination unit determines that the calculated distance is equal to or less than the preset distance.

4. The autonomous travel cart (1) according to claim 2 or 3, **characterized in that**
the subtraction distance corresponds to a variation in measurement of the second distance from the autonomous travel cart (1) to the obstacle in the moving direction that is obtained through the ultrasonic obstacle detection device (12).

5. The autonomous travel cart (1) according to any one of claims 1 through 4, **characterized in that**
the laser obstacle detection device (11) includes a two-dimensional planar obstacle-detection region (11A) where a laser beam is scanned, obtains a detection information including an obstacle position in the obstacle-detection region, and outputs the obtained detection information.

6. A method of controlling a travel of an autonomous travel cart (1) travelling autonomously in accordance with a moving route, the method **characterized by** comprising the steps of:
obtaining a detection information including an obstacle position by emitting a laser beam by a laser obstacle detection device (11);
obtaining a distance information from the autonomous travel cart (1) to an obstacle around the autonomous travel cart (1) by transmitting an ultrasonic wave by an ultrasonic obstacle detection device (12),
determining whether or not the obstacle detected by the ultrasonic obstacle detection device (12) is detected by the laser obstacle detection device (11) based on the detection information obtained in the step of obtaining the detection information and the distance information obtained in the step of obtaining the distance information; and
executing a travel control based on the detection information obtained in the step of obtaining the detection information when it is determined that the obstacle detected by the ultrasonic obstacle detection device (12) is detected by the laser obstacle detection device (11) in the step of determining whether or not the obstacle detected by the ultrasonic obstacle detection device (12) is detected by the laser obstacle detection, and
executing the travel control based on the distance information obtained in the step of obtaining the distance information when it is determined that the obstacle detected by the ultrasonic obstacle detection device (12) is not detected by the laser obstacle detection device (11) in the step of determining whether or not the obstacle detected by the ultrasonic obstacle detection device (12) is detected by the laser obstacle detection.
